# EUROPEAN PATENT SPECIFICATION

(11) **EP 2 509 481 B1**
(45) Date of publication and mention of the grant of the patent: **06.08.2014**
(21) Application number: 09802230.4
(22) Date of filing: 11.12.2009
(51) Int. Cl.: A47J 43/28, A47J 45/06

(54) **ASSEMBLY OF A COOKING VESSEL AND A COOKING UTENSIL**
ANORDNUNG AUS EINEM KOCHGEFÄSS UND EINEM KOCHUTENSIL
ENSEMBLE CONSTITUÉ D'UN RÉCIPIENT DE CUISSON ET D'UN USTENSILE DE CUISSON

(43) Date of publication of application: 17.10.2012
(73) Proprietor: Lumenflon S.p.A., 25030 Brandico, BRESCIA (IT)
(72) Inventor: PRANDELLI, Vigilio, I-25030 Brandico, Brescia (IT)
(74) Representative: Chimini, Francesco
(86) International application number: PCT/IT2009/000561
(87) International publication number: WO 2011/070601

(56) References cited:
- GB-A- 761 503
- JP-A- 2005 334 583
- JP-U- 7 036 944
- US-A- 1 196 543
- US-A- 2 544 846
- US-A1- 2005 241 109

## Description

The present invention relates to the sector of kitchen cooking instruments and refers in particular to an assembly of a vessel for cooking foods and a cooking utensil suitable to be used in conjunction with said vessel. The cooking vessel comprises a container for a food to be cooked and a handle which extends from a lateral portion of said container. The cooking utensil comprises a terminal working portion, that is suitable to interact with the food, and an elongated grip portion.

Examples of cooking vessels of this type are frying pans, grill pans, sauce pans and casseroles. Cooking utensils utilisable with such vessels are, for example, fish slices, wooden forks or spoons, ladles etc.

Cooking vessels having a handle suitable to act as a support for the utensil during cooking are already known. Such combinations of vessel handle and utensil are aimed in fact at resolving the problem of where to put the utensil during use or immediately after preparation of the food. In fact, the utensil used to handle the food gets dirty during cooking and a way of resting it, when not handled, without dirtying the worktop or other objects around the hob, needs to be found.

Cooking vessels having a shaped handle to hold the cooking utensil when not in use have thus been proposed. Given that during the cooking of a food the utensil is usually used in a discontinuous manner, the coupling of the utensil and handle must be such as to allow immediate separation of the utensil from the handle, with one hand, and if possible without moving the cooking vessel. At most therefore the handle has coupling means to the utensil, for example lateral tabs, suitable to prevent the utensil from falling off the side of the handle.

US 2005/0241109, JP 07 36944, US 1 196 543 and JP-A- 2005 334583 disclose examples of combinations of vessel handle and utensil, wherein the cooking vessel has a handle suitable to act as a support for the utensil during cooking. GB 761 503 discloses a cooking utensil including a grid plate releasably supported for pivotal motion in relation to the edge of the utensil and having a hand grip opposite the support point, wherein grid is designed so as to be capable of lying adjacent the bottom of the utensil and of pressing foodstuff against said bottom during cooking. US 2 544 846 discloses an assembly comprising a movable bottom or support suitable for supporting the food in a lowered position during cooking and for raising the food in the pan after cooking. The food is thus maintained warm and kept out of contact with the grease in the pan.

The purpose of the present invention is rather to propose a cooking vessel and relative cooking utensil suitable to be coupled so as to form a single assembly when not used, in particular when stored, for example, with the vessel hanging from a hook, and also at the moment of sale.

Another purpose of the present invention is to propose an assembly as described above which makes it possible to pile a number of vessels with relative utensils on top of each other or inside each other, thus achieving the dual result of saving space when storing both the vessels and the utensils.

Such purposes are achieved by an assembly according to claim 1. The dependent claims describe preferred or advantageous embodiments of the assembly.

The characteristics and advantages of the assembly according to the invention will, in any case, be evident from the description below of its preferred embodiments made by way of a non-limiting example with reference to the attached drawings, wherein:
- figure 1 shows a perspective view of an assembly of a cooking vessel and a cooking utensil, in a first embodiment;
- figure 2 shows the assembly in figure 1, seen from the side;
- figure 3 is a cross-section of the assembly along the line A-A in figure 2;
- figure 4 shows an assembly in a second embodiment, in a perspective view;
- figure 5 shows only the handle of the cooking vessel;
- figure 6 shows a detail of the cooking utensil in the assembly of figure 4;
- figure 7 shows an assembly in a third embodiment, in a perspective view;
- figure 8 shows the handle of the cooking vessel only;
- figure 9 shows a detail of the cooking utensil of the assembly in figure 7;
- figure 10 shows an assembly in a fourth embodiment, in a perspective view;
- figure 11 shows the handle of the cooking vessel only;
- figure 12 is a transversal cross-section of the handle in figure 11; and
- figure 13 is a transversal cross-section of the grip portion of the cooking utensil.

In said drawings, reference numerals 10; 20; 30; 40 globally denote in its entirety an assembly of a cooking vessel 11; 21; 31; 41 and a cooking utensil 12; 22; 32; 42 according to the invention.

The cooking vessel comprises a container 13; 23; 33; 43 for a food to be cooked and a handle 14; 24; 34; 44 which extends from a lateral wall of said container. The handle may be permanently attached to the cooking container, or detachable.

The cooking utensil 12-42 comprises a working portion 15; 25; 35; 45, in other words suitable to interact with the food, for example, in the case of a fish slice, to remove it from the bottom of the container and turn it, and a grip portion 16; 26, 36; 46 of an elongated shape and of a length for example comparable to that of the handle of the vessel.

According to one aspect of the invention, in the handle of the vessel and in the grip portion of the utensil there are respective coupling portions, complementary to each other, which enable blocking of the utensil to the cooking vessel in a configuration of substantial overlap even when the vessel is hung in a vertical position.

A configuration of essential overlap is taken to mean a relation of at least close contact, with the respective longitudinal axes essentially parallel to each other.

According to the invention the grip portion of the utensil terminates near the attachment of the handle to the container and is connected to the working portion by means of a connection portion 17; 27; 37; 47 which passes over the lateral wall of the container and extends essentially parallel to it inside the container, as far as the bottom. In other words, before the attachment zone of the handle to the lateral wall of the container, the cooking utensil deviates in relation to the direction of the handle so as to pass over the rim of the container. Depending on the shape of the handle and/or of its point of attachment to the lateral wall of the container, the connection portion of the cooking utensil may have a more or less accentuated curved shape, for example bridge-shaped. In any case, once beyond the lateral wall of the vessel, such connection portion suddenly flexes downwards, so as to be as close as possible to the lateral wall. In other words, compared to the direction taken by the grip portion, the connection portion which extends inside the container is inclined or deviated downwards. In some embodiments, such downward deviation of the connection portion actually forms an accentuated discontinuity in the line of the cooking utensil. This is so as to adapt the profile of the cooking utensil not just to that of the handle, but to that of the entire cooking vessel.

In addition, the connection portion of the cooking utensil is essentially the same height as the lateral wall of the container, so that the working portion rests on or skims the bottom of the cooking vessel.

This way, the cooking utensil, when connected to the cooking vessel, does not significantly limit the volume of the container and thus permits the use of such volume, for example to house the container of another cooking vessel.

Some preferred embodiments of the assembly of a cooking vessel and of a relative cooking utensil will now be described.

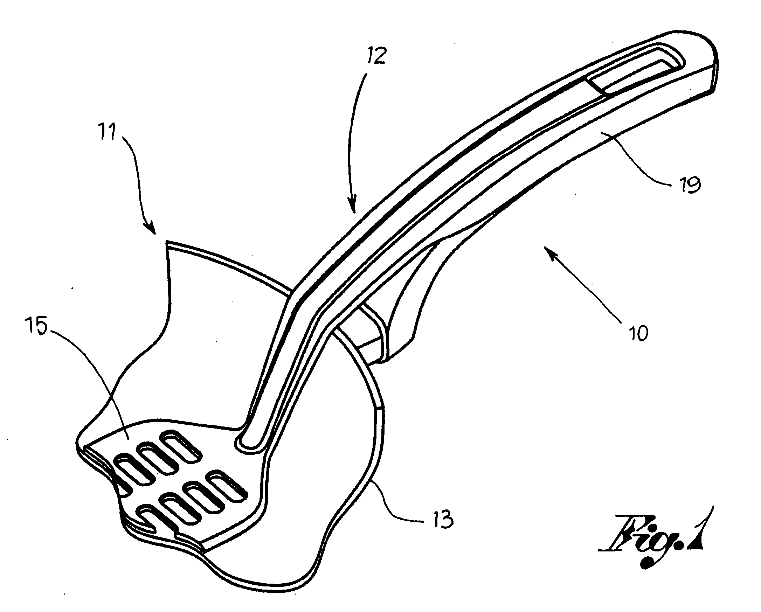

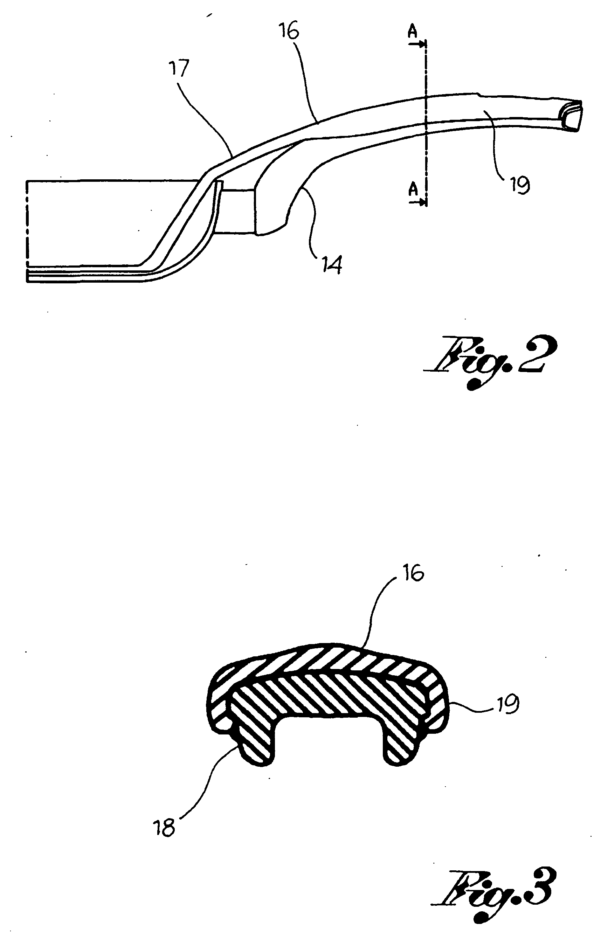

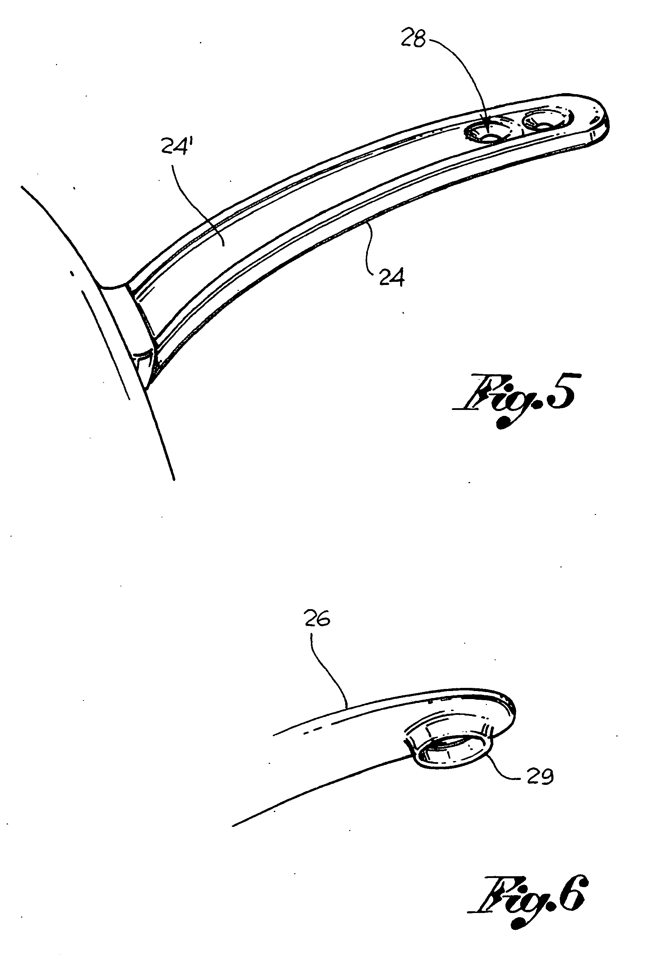

In one embodiment, for example shown in figures 1-6, the coupling portions are shaped so as to form a snap coupling. In particular, at least one of the coupling portions of the handle of the vessel and of the grip portion of the utensil comprises elastically flexible blocking means suitable to snap engage corresponding blocking counter means made on the other of said coupling portions.

For example (figures 1-3), at least one portion of the handle 14 of the vessel has a convex outer surface defining at least one undercut 18; at least one coupling portion of the grip portion 16 of the utensil is a concave shape essentially complementary to said convex surface and with flexible lateral walls 19 suitable to be engaged by said undercut 18. Such coupling portions 18, 19 may extend all along the length of the handle and of the grip portion of the utensil, or, alternatively, be localised in one or more areas of the handle and of the grip portion.

In one embodiment variation, in at least one portion of the handle of the vessel there is a seat suitable to receive at least one corresponding coupling portion of the grip portion of the utensil.

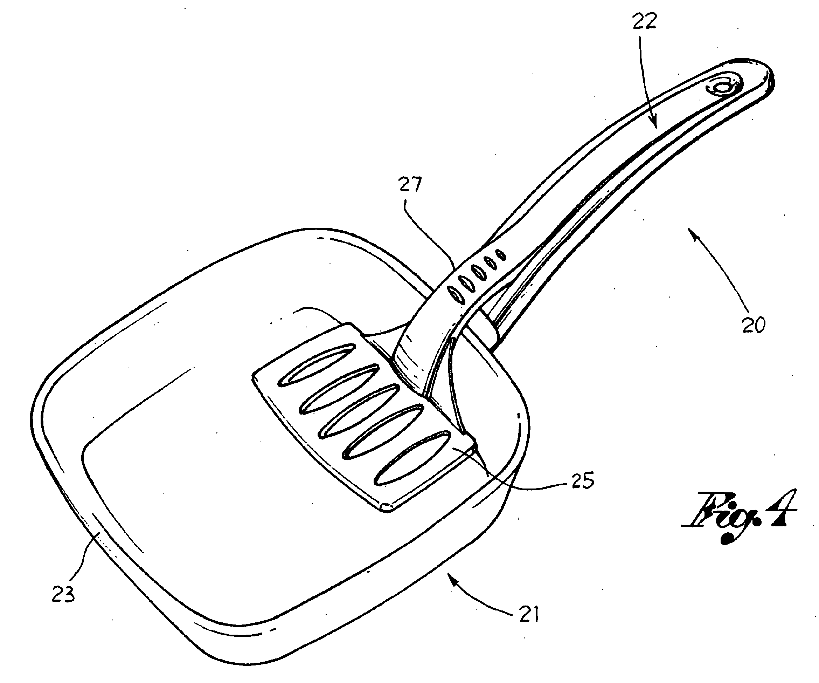

For example (figures 4-6), said seat comprises at least one aperture made near the distal end of the handle 24. The coupling portion of the grip portion 26 comprises at least one projection 29 which extends downwards from a distal portion of the grip portion and which is suitable to snap engage in said aperture.

In a further embodiment, the seat made in the handle is in the shape of a longitudinal channel made essentially along the entire extension of the handle and delimited by lateral walls defining an undercut. Essentially the entire grip portion of the utensil snap engages into said longitudinal channel. This embodiment solution is particularly advantageous in that it enables at least partial incorporation of the grip portion in the handle of the vessel, that is, the inclusion of at least part of the grip portion in the transversal dimension of the handle.

It should be noted that such incorporation of the grip portion in the handle is also illustrated in the previous example too (figures 4-6), in which the handle 24, beyond the aperture 28, has a lowered longitudinal zone 24' which accommodates the grip portion 26 of the utensil.

In one embodiment, the coupling portions are shaped so as form a shaped coupling, or interlock, preferably with calibrated interference. The calibrated interference makes it possible to achieve a stable coupling between the two coupling portions alternative to or combined with the snap coupling.

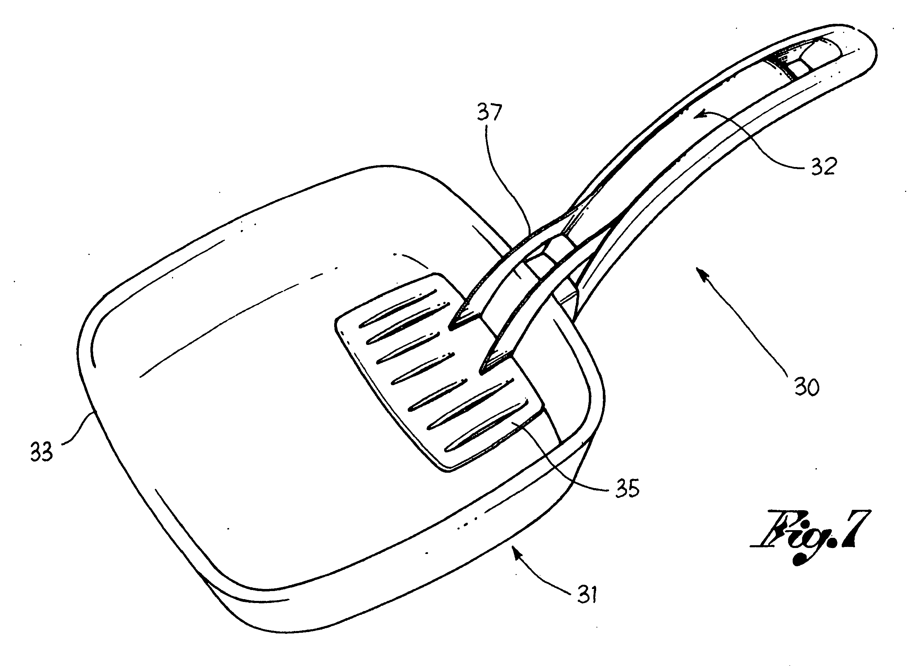

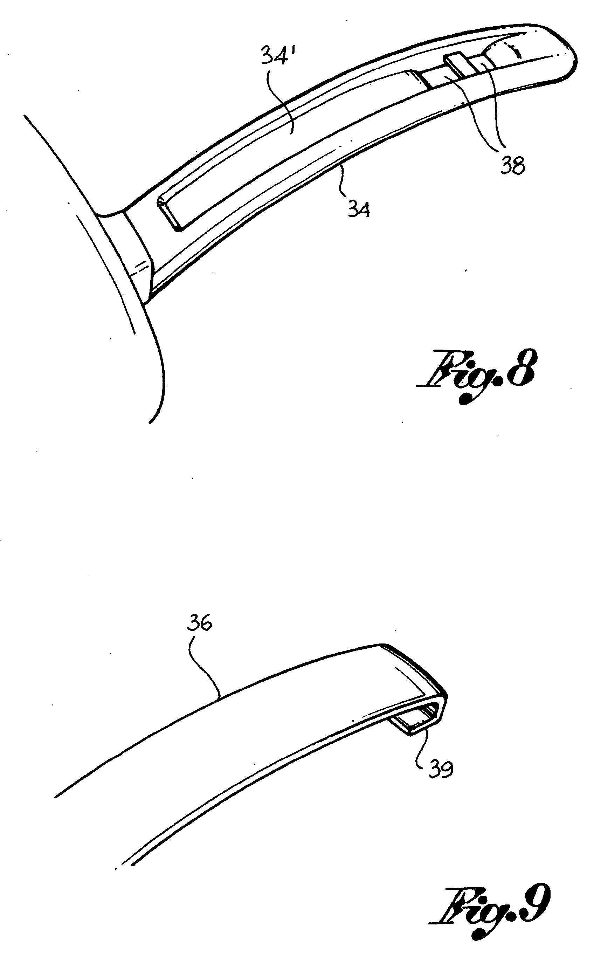

For example (figures 7-9), the handle 34 has, near its distal end, at least one through aperture 38 in which it engages a hook shaped end 39 of the grip portion 36.

In this case too the handle 34 is influenced by a lowered longitudinal area 34' housing the grip portion 36.

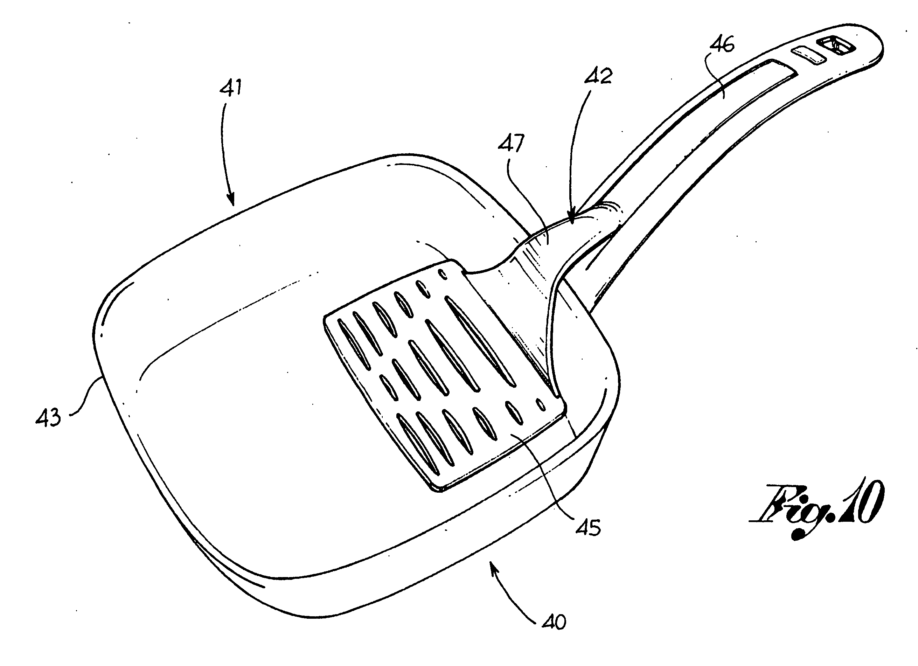

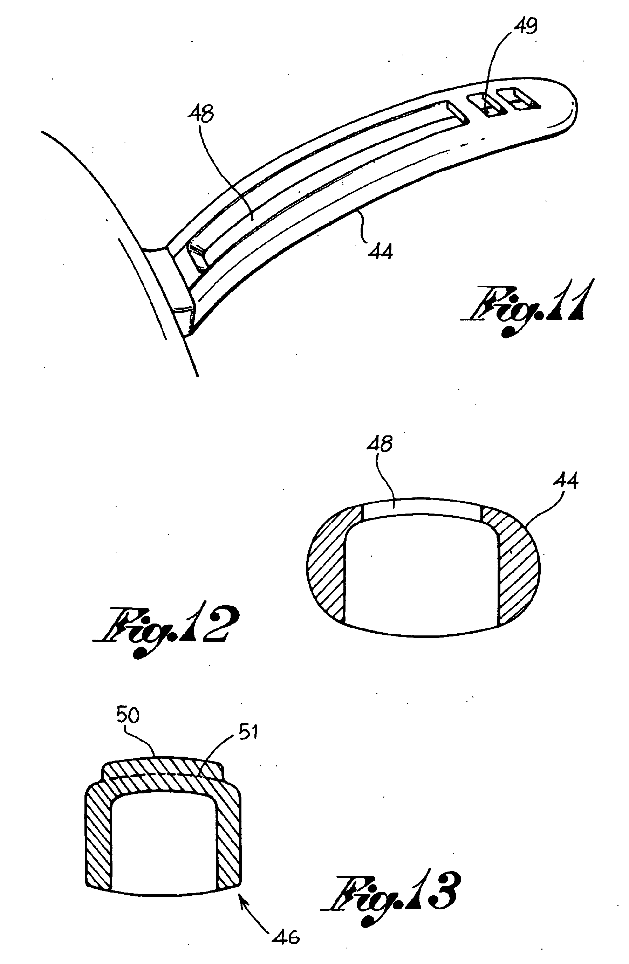

In another embodiment (figures 10-13), the handle 44 has a channel-shaped structure open downwards and bears a first through aperture 48, for example of an elongated shape, near the attachment end of the vessel, and at least one second through aperture 49 made near the distal end of the handle 44. The grip portion 46 of the utensil 42 is housed at least partially inside said channel-shaped structure of the handle and engages in at least said first and second aperture 48, 49. In particular, the grip portion 42 of the utensil has raised or thicker zones 50, at least at the point of the second through aperture 49 in the handle and lowered or thinner zones 51, elsewhere. The connection portion 47 to the working portion 45 extends from the end of the part of the grip portion inserted in the first aperture 48.

This example of a shaped coupling also makes it possible to incorporate the grip portion of the utensil in the handle, therefore avoiding that the coupling results in an increase in size compared to a single handle.

More generally however, the grip portion of the utensil adheres essentially to the shape of the handle so that the grip portion and handle appear closely connected to form a single body.

In one advantageous embodiment, the grip portion of the utensil slides longitudinally in relation to the handle. This way, the same cooking utensil can be associated with handles of different lengths.

In addition, in the embodiments of the handles 24; 34; 44 two apertures 28; 38; 49 are provided next to the distal ends of said handles, so that cooking utensils of different lengths, or containers of different shapes, may be joined to the same handle.

A person skilled in the art may make modifications, adaptations and replacements of elements with others functionally equivalent to the embodiments of the assembly according to the invention so as to satisfy contingent requirements while remaining within the scope of protection of the following claims.

## Claims

1. Assembly of a cooking vessel (11; 21; 31; 41) and a cooking utensil (12; 22; 32; 42), where the cooking vessel comprises a container (13; 23; 33; 43) for a food to be cooked and a handle (14; 24; 34; 44) which extends from a lateral wall of said container, where the cooking utensil is a spatula or a fork or a spoon for turning the food or taking away the food from the container and comprises a working portion (15; 25; 35; 45) suitable to interact with the food and a grip portion (16; 26, 36; 46) of an elongated shape, wherein in the handle of the vessel and in the grip portion of the utensil there are respective coupling portions (18, 19; 28, 29; 38, 39; 48-50) complementary to each other which enable blocking of the utensil to the cooking vessel in a configuration of essential overlap even when the vessel is hung in a vertical position, wherein the grip portion of the utensil terminates near the attachment of the handle to the container and is connected to the working portion by a connection portion (17; 27; 37; 47) which passes over the lateral wall of the container and extends essentially parallel to it inside the container, almost as far as the bottom, wherein the working portion (15; 25; 35; 45) extends parallel to the bottom of the cooking vessel and lies on or skims said bottom of the cooking vessel.

2. Assembly according to claim 1, wherein the grip portion (16; 26, 36; 46) of the utensil extends essentially along a longitudinal axis of the utensil, and in which the connection portion (17; 27; 37; 47) inside the container is inclined downwards in relation to said longitudinal axis, so as to be as close as possible and adherent to the lateral wall of said container.

3. Assembly according to any of the previous claims, wherein said coupling portions are shaped so as to form a snap coupling.

4. Assembly according to any of the previous claims, wherein said coupling portions are shaped so as form a shaped coupling, or to interlock.

5. Assembly according to claim 4, wherein said shaped coupling or interlock is made with calibrated interference.

6. Assembly according to any of the previous claims, wherein at least one of the coupling portions of the handle of the vessel and the grip portion of the utensil comprises elastically flexible blocking means (19) suitable to snap engage corresponding blocking counter-means (18) made on the other of said coupling portions.

7. Assembly according to claim 6, wherein at least one portion of the handle of the vessel has a convex outer surface defining at least one undercut (18), and wherein at least one coupling portion of the grip portion of the utensil is a concave shape essentially complementary to said convex surface and with flexible lateral walls (19) suitable to be engaged by said undercut.

8. Assembly according to claim 6, wherein on the side facing upwards of at least one portion of the handle of the vessel there is a seat (28; 38) suitable to receive at least one corresponding coupling portion (29; 39) of the grip portion of the utensil.

9. Assembly according to claim 8, wherein said seat (28) is an aperture made near the distal end of the handle and wherein said coupling portion comprises a projection (29) which extends from a distal portion of the grip portion and which is suitable to snap into said aperture.

10. Assembly according to claim 8, wherein said seat is in the shape of a longitudinal channel made essentially along the entire extension of the handle and delimited by lateral walls defining an undercut, and wherein essentially the entire grip portion of the utensil snaps into said longitudinal channel.

11. Assembly according to any of the previous claims, wherein the handle has, near its distal end, at least one through aperture (38), and wherein the grip portion of the utensil terminates with a shaped extremity (39) suitable to couple onto said through aperture.

12. Assembly according to any of the claims 8-11, wherein the upper surface of the handle is influenced by a lowered longitudinal zone (34') in which the grip portion of the utensil is at least partially housed.

13. Assembly according to any of the previous claims, wherein the handle has a channel-shaped structure open towards the bottom and has a first through aperture (48) made near the end attached to the vessel, and at least one second through aperture (49) made near the distal end of the handle, and wherein the grip portion of the utensil is at least partially housed inside said channel-shaped structure of the handle and engages in at least said first and second aperture.

14. Assembly according to any of the previous claims, wherein the grip portion of the utensil adheres essentially to the shape of the handle so that the grip portion and handle appear closely connected to form a single body.

15. Assembly according to claim 14, wherein the grip portion of the utensil is included inside the transversal dimension of the handle.

16. Assembly according to any of the previous claims, wherein the grip portion of the utensil slides longitudinally in relation to the handle.

## Patentansprüche

1. Anordnung aus einem Kochgefäß (11; 21; 31; 41) und einem Kochutensil (12; 22; 32; 42), wo das Kochgefäß einen Behälter (13; 23; 33; 43) für ein zu kochendes Lebensmittel und einen Griff (14; 24; 34; 44) umfasst, der sich von einer lateralen Wand des Behälters erstreckt, wo das Küchenutensil ein Pfannenwender oder eine Gabel oder ein Löffel zum Wenden des Lebensmittels oder Entfernen des Lebensmittels aus dem Behälter ist und einen Arbeitsabschnitt (15; 25; 35; 45), der geeignet ist, mit dem Lebensmittel zu interagieren, und einen Greifabschnitt (16; 26, 36; 46) von länglicher Form umfasst, wobei in dem Griff des Gefäßes und in dem Greifabschnitt des Utensils jeweilige Kopplungsabschnitte (18, 19; 28, 29; 38, 39; 48-50) komplementär zueinander sind, die ein Blockieren des Utensils an dem Kochgefäß in einer Konfiguration eines im Wesentlichen Überlappens ermöglichen, selbst wenn das Gefäß in einer vertikalen Position aufgehängt ist, wobei der Greifabschnitt des Utensils nahe der Anbringung des Griffs an dem Behälter endet und mit dem Arbeitsabschnitt durch einen Verbindungsabschnitt (17; 27; 37; 47) verbunden ist, der über die laterale Wand des Behälters verläuft und sich im Wesentlichen parallel dazu innerhalb des Behälters erstreckt, und zwar nahezu so weit wie der Boden, wobei sich der Arbeitsabschnitt (15; 25; 35; 45) parallel zu dem Boden des Kochgefäßes erstreckt und auf dem Boden des Kochgefäßes liegt oder über diesen gleitet.

2. Anordnung nach Anspruch 1, wobei sich der Greifabschnitt (16; 26, 36; 46) des Utensils im Wesentlichen entlang einer Längsachse des Utensils erstreckt, und wobei der Verbindungsabschnitt (17; 27; 37; 47) im Inneren des Behälters nach unten im Verhältnis zu der Längsachse geneigt ist, um so nah wie möglich und anhaftend an der lateralen Wand des Behälters zu sein.

3. Anordnung nach einem der vorhergehenden Ansprüche, wobei die Kopplungsabschnitte so geformt sind, dass sie eine Schnappkopplung bilden.

4. Anordnung nach einem der vorhergehenden Ansprüche, wobei die Kopplungsabschnitte so geformt sind, dass sie eine geformte Kopplung, oder Verriegelung, bilden.

5. Anordnung nach Anspruch 4, wobei die geformte Kopplung oder Verriegelung mit kalibrierter Interferenz gemacht ist.

6. Anordnung nach einem der vorhergehenden Ansprüche, wobei zumindest einer der Kopplungsabschnitte des Griffs des Gefäßes und des Greifabschnitts des Utensils elastisch flexible Blockiermittel (19) umfasst, die geeignet sind, in entsprechende Blockiergegenmittel (18) schnappend einzugreifen, die an dem bzw. den anderen der Kopplungsabschnitte gemacht sind.

7. Anordnung nach Anspruch 6, wobei zumindest ein Abschnitt des Griffs des Gefäßes eine konvexe äußere Fläche bzw. Oberfläche aufweist, die zumindest einen Unter- bzw. Hinterschnitt (18) definiert, und wobei zumindest ein Kopplungsabschnitt des Greifabschnitts des Utensils eine konkave Form im Wesentlichen komplementär zu der konvexen Fläche und mit flexiblen lateralen Wänden (19) ist, die geeignet sind, von dem Hinterschnitt in Eingriff genommen zu werden.

8. Anordnung nach Anspruch 6, wobei auf der Seite, die aufwärts zumindest eines Abschnitts des Griffs des Gefäßes zeigt, ein Sitz (28; 38) ist, der geeignet ist, zumindest einen entsprechenden Kopplungsabschnitt (29; 39) des Greifabschnitts des Utensils aufzunehmen.

9. Anordnung nach Anspruch 8, wobei der Sitz (28) eine Öffnung ist, die nahe dem distalen Ende des Griffs gemacht ist, und wobei der Kopplungsabschnitt einen Vorsprung (29) umfasst, der sich von einem distalen Abschnitt des Greifabschnitts erstreckt und der geeignet ist, in die Öffnung einzuschnappen.

10. Anordnung nach Anspruch 8, wobei der Sitz in der Form eines Längskanals ist, der im Wesentlichen entlang der Gesamterstreckung des Griffs gemacht ist und durch laterale Wände begrenzt wird, die einen Unter- bzw. Hinterschnitt definieren, und wobei im Wesentlichen der gesamte Greifabschnitt des Utensils in den Längskanal einschnappt.

11. Anordnung nach einem der vorhergehenden Ansprüche, wobei der Griff nahe seinem distalen Ende zumindest eine Durchgangsöffnung (38) aufweist, und wobei der Greifabschnitt des Utensils mit einer geformten Extremität (39) endet, die geeignet ist, auf die Durchgangsöffnung zu koppeln.

12. Anordnung nach einem der Ansprüche 8-11, wobei die obere Fläche des Griffs durch eine abgesenkte Längszone (34') beeinflusst wird, in welcher der Greifabschnitt des Utensils zumindest teilweise untergebracht ist.

13. Anordnung nach einem der vorhergehenden Ansprüche, wobei der Griff eine kanalförmige Struktur aufweist, die zu dem Boden hin offen ist und eine erste Durchgangsöffnung (48), die nahe dem Ende gemacht ist, das an dem Gefäß angebracht ist, und zumindest eine zweite Durchgangsöffnung (49) aufweist, die nahe dem distalen Ende des Griffs gemacht ist, und wobei der Greifabschnitt des Utensils zumindest teilweise im Inneren der kanalförmigen Struktur des Griffs untergebracht ist und in zumindest die erste und zweite Öffnung eingrifft.

14. Anordnung nach einem der vorhergehenden Ansprüche, wobei der Greifabschnitt des Utensils im Wesentlichen an der Form des Griffs anhaftet, so dass der Greifabschnitt und der Griff eng verbunden erscheinen, um einen einzelnen bzw. einzigen Körper zu bilden.

15. Anordnung nach Anspruch 14, wobei der Greifabschnitt des Utensils im Inneren der transversalen Dimension des Griffs enthalten ist.

16. Anordnung nach einem der vorhergehenden Ansprüche, wobei der Greifabschnitt des Utensils längs im Verhältnis zu dem Griff gleitet.

## Revendications

1. Ensemble constitué d'un récipient de cuisson (11; 21; 31; 41) et d'un ustensile de cuisson (12; 22; 32; 42), dans lequel le récipient de cuisson comprend un contenant (13; 23; 33; 43) pour un aliment à faire cuire et une poignée (14; 24; 34; 44) qui s'étend à partir d'une paroi latérale dudit contenant, dans lequel l'ustensile de cuisson est une spatule ou une fourchette ou une cuillère pour remuer la nourriture ou retirer la nourriture du contenant et comprend une partie de travail (15; 25; 35; 45) appropriée pour interagir avec la nourriture et une partie de préhension (16; 26, 36; 46) de forme allongée, dans lequel, dans la poignée du récipient et dans la partie de préhension de l'ustensile, on trouve des parties de couplage (18, 19; 28, 29; 38, 39; 48-50) respectives complémentaires entre elles qui permettent de bloquer l'ustensile sur le récipient de cuisson dans une configuration de chevauchement essentiel même lorsque le récipient est suspendu dans une position verticale, dans lequel la partie de préhension de l'ustensile se termine à proximité de la fixation de la poignée au contenant et est raccordée à la partie de travail par une partie de raccordement (17; 27; 37; 47) qui passe sur la paroi latérale du contenant et s'étend sensiblement parallèlement à cette dernière à l'intérieur du contenant, presque jusqu'au fond, dans lequel la partie de travail (15; 25; 35; 45) s'étend parallèlement au fond du récipient de cuisson et est sur ou effleure ledit fond du récipient de cuisson.

2. Ensemble selon la revendication 1, dans lequel la partie de préhension (16; 26, 36; 46) de l'ustensile s'étend essentiellement le long d'un axe longitudinal de l'ustensile, et dans lequel la partie de raccordement (17; 27; 37; 47) à l'intérieur du contenant est inclinée vers le bas par rapport audit axe longitudinal, afin d'être aussi proche que possible et adhérer à la paroi latérale dudit contenant.

3. Ensemble selon l'une quelconque des revendications précédentes, dans lequel lesdites parties de couplage sont formées afin de former un couplage à emboîtement.

4. Ensemble selon l'une quelconque des revendications précédentes, dans lequel lesdites parties de couplage sont formées afin de former un couplage formé ou pour s'imbriquer.

5. Ensemble selon la revendication 4, dans lequel ledit couplage formé ou imbrication est réalisé(e) avec une interférence calibrée.

6. Ensemble selon l'une quelconque des revendications précédentes, dans lequel au moins l'une des parties de couplage de la poignée du récipient et la partie de préhension de l'ustensile comprend des moyens de blocage élastiquement flexibles (19) appropriés pour mettre en prise par encliquetage des contre-moyens de blocage (18) correspondants réalisés sur l'autre parmi lesdites parties de couplage.

7. Ensemble selon la revendication 6, dans lequel au moins une partie de la poignée du récipient a une surface externe convexe définissant au moins une gorge (18), et dans lequel au moins une partie de couplage de la partie de préhension de l'ustensile a une forme concave essentiellement complémentaire par rapport à ladite surface convexe et avec des parois latérales flexibles (19) appropriées pour être mise en prise par ladite gorge.

8. Ensemble selon la revendication 6, dans lequel, du côté orienté vers le haut d'au moins une partie de la poignée du récipient, on trouve un siège (28; 38) approprié pour recevoir au moins une partie de couplage (29; 39) correspondante de la partie de préhension de l'ustensile.

9. Ensemble selon la revendication 8, dans lequel ledit siège (28) est une ouverture pratiquée à proximité de l'extrémité distale de la poignée et dans lequel ladite partie de couplage comprend une saillie (29) qui s'étend à partir d'une partie distale de la partie de préhension et qui est appropriée pour s'emboîter dans ladite ouverture.

10. Ensemble selon la revendication 8, dans lequel ledit siège a la forme d'un canal longitudinal réalisé essentiellement le long de toute l'extension de la poignée et délimité par des parois latérales définissant une gorge, et dans lequel essentiellement toute la partie de préhension de l'ustensile s'emboîte dans ledit canal longitudinal.

11. Ensemble selon l'une quelconque des revendications précédentes, dans lequel la poignée a, à proximité de son extrémité distale, au moins une ouverture débouchante (38), et dans lequel la partie de préhension de l'ustensile se termine par une extrémité formée (39), appropriée pour se coupler sur ladite ouverture débouchante.

12. Ensemble selon l'une quelconque des revendications 8 à 11, dans lequel la surface supérieure de la poignée est influencée par une zone longitudinale abaissée (34') dans lequel la partie de préhension de l'ustensile est au moins partiellement logée.

13. Ensemble selon l'une quelconque des revendications précédentes, dans lequel la poignée a une structure en forme de canal ouverte vers le fond et a une première ouverture débouchante (48) réalisée à proximité de l'extrémité fixée au récipient, et au moins une seconde ouverture débouchante (49) réalisée à proximité de l'extrémité distale de la poignée, et dans lequel la partie de préhension de l'ustensile est au moins partiellement logée à l'intérieur de ladite structure en forme de canal de la poignée et se met en prise dans au moins lesdites première et seconde ouvertures.

14. Ensemble selon l'une quelconque des revendications précédentes, dans lequel la partie de préhension de l'ustensile adhère essentiellement à la forme de la poignée de sorte que la partie de préhension et la poignée apparaissent étroitement raccordées afin de former un seul corps.

15. Ensemble selon la revendication 14, dans lequel la partie de préhension de l'ustensile est incluse à l'intérieur de la dimension transversale de la poignée.

16. Ensemble selon l'une quelconque des revendications précédentes, dans lequel la partie de préhension de l'ustensile coulisse longitudinalement par rapport à la poignée.
